# EUROPEAN PATENT APPLICATION

(11) **EP 4 092 982 A1**
(43) Date of publication of application: **23.11.2022**
(21) Application number: 21174917.1
(22) Date of filing: 20.05.2021
(51) Int. Cl.: H04L 29/06, H04W 12/069, H04W 12/084

(54) **AUTHENTICATION OF NETWORK REQUEST**

(71) Applicant: Nokia Technologies Oy, 02610 Espoo (FI)
(72) Inventor: JERICHOW, Anja, 85567 Grafing bei München (DE)
(74) Representative: Laine IP Oy

(57) **Abstract**

According to an example aspect of the present invention, there is provided an apparatus configured to receive a service request for a service provided by the apparatus, the service request comprising an access token, determine whether to provide the service based at least partly on an authentication based on a credential data element in the service request, the credential data element comprising a first network function set identifier, the authentication comprising verifying a cryptographic signature applied over the first network function set identifier, and provide the service responsive to a result of the determination indicating the service is to be provided. The apparatus may be operated in a network with user equipments, UEs.

## Description

### FIELD

The present disclosure relates to security procedures, such as authentication procedures, in communication networks.

### BACKGROUND

In networks supporting wireless or wire-based communication, discovering network functions, NFs, and network function services is of interest as many network function instances may be virtualized and be of a dynamic nature. Core network, CN, entities may seek to discover a set of one or more NF instances and NF service instances for a specific NF service or an NF type. Examples of such CN entities include NFs and service communication proxies, SCPs. Examples of NF instances to be discovered include application functions, gateways and subscriber data repositories, and also application related functions, for example for vertical industry support, or entertainment. Further examples include a resource control or management function, a session management or control function, an interworking, data management or storage function, an authentication function or a combination of one or more of these functions. NF service instances, known also as NF services, include individual services provided by an NF. One NF may be configured to provide more than one service, wherein each of the more than one service may be reachable using a different approach, such as a different address or port or communication protocol.

NF service discovery may be enabled via a NF discovery procedure, as specified for wireless communication networks in technical specifications established by the third generation partnership project, 3GPP, or GSMA, GSM association, for example. However, technology disclosed herein has relevance also to wire-line communication networks.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core, at least one memory including computer program code, the at least one memory and the computer program code being configured to, with the at least one processing core, cause the apparatus at least to receive a service request for a service provided by the apparatus, the service request comprising an access token, determine whether to provide the service based at least partly on an authentication based on a credential data element in the service request, the credential data element comprising a first network function set identifier, the authentication comprising verifying a cryptographic signature applied over the first network function set identifier, and provide the service responsive to a result of the determination indicating the service is to be provided.

According to a second aspect of the present disclosure, there is provided an apparatus comprising at least one processing core, at least one memory including computer program code, the at least one memory and the computer program code being configured to, with the at least one processing core, cause the apparatus at least to provide a service request for a service at a network function provider to the network function provider, and include in the service request an access token and a credential data element, the access token comprising a first network function set identifier indication and the credential data element comprising a second network function set identifier and a cryptographic signature applied over the second network function set identifier.

According to a third aspect of the present disclosure, there is provided an apparatus comprising at least one processing core, at least one memory including computer program code, the at least one memory and the computer program code being configured to, with the at least one processing core, cause the apparatus at least to receive, in a network repository function, from a network function consumer via a proxy entity, an access token request concerning a service provided by a network function provider, the access token request comprising a credential data element of the network function consumer, the credential data element comprising a first network function set identifier identifying a set of network functions, the credential data element comprising a cryptographic signature applied over the first network function set identifier, decide whether to provide the requested access token, and responsive to deciding to provide the access token, and send the access token to the network function consumer, the access token comprising a network function set identifier indication.

According to a fourth aspect of the present disclosure, there is provided a method, comprising receiving a service request for a service provided by an apparatus performing the method, the service request comprising an access token, determining whether to provide the service based at least partly on an authentication based on a credential data element in the service request, the credential data element comprising a first network function set identifier, the authentication comprising verifying a cryptographic signature applied over the first network function set identifier, and providing the service responsive to a result of the determination indicating the service is to be provided.

According to a fifth aspect of the present disclosure, there is provided a method, comprising providing, from an apparatus, a service request for a service at a network function provider to the network function provider, and including in the service request an access token and a credential data element, the access token comprising a first network function set identifier indication and the credential data element comprising a second network function set identifier and a cryptographic signature applied over the second network function set identifier.

According to a sixth aspect of the present disclosure, there is provided a method, comprising receiving, in a network repository function, from a network function consumer via a proxy entity, an access token request concerning a service provided by a network function provider, the access token request comprising a credential data element of the network function consumer, the credential data element comprising a first network function set identifier identifying a set of network functions, the credential data element comprising a cryptographic signature applied over the first network function set identifier, deciding whether to provide the requested access token, and responsive to deciding to provide the access token, and sending the access token to the network function consumer, the access token comprising a network function set identifier indication.

According to a seventh aspect of the present disclosure, there is provided an apparatus comprising means for receiving a service request for a service provided by the apparatus, the service request comprising an access token, means for determining whether to provide the service based at least partly on an authentication based on a credential data element in the service request, the credential data element comprising a network function set identifier, the authentication comprising verifying a cryptographic signature applied over the network function set identifier, and means for providing the service responsive to a result of the determination indicating the service is to be provided.

According to an eighth aspect of the present disclosure, there is provided an apparatus comprising means for providing, from an apparatus, a service request for a service at a network function provider to the network function provider, and means for including in the service request an access token and a credential data element, the access token comprising a first network function set identifier indication and the credential data element comprising a second network function set identifier and a cryptographic signature applied over the second network function set identifier.

According to a ninth aspect of the present disclosure, there is provided an apparatus comprising means for receiving, in a network repository function, from a network function consumer via a proxy entity, an access token request concerning a service provided by a network function provider, the access token request comprising a credential data element of the network function consumer, the credential data element comprising a network function set identifier identifying a set of network functions, the credential data element comprising a cryptographic signature applied over the network function set identifier, means for deciding whether to provide the requested access token, and responsive to deciding to provide the access token, and means for sending the access token to the network function consumer, the access token comprising a network function set identifier indication.

According to a tenth aspect of the present disclosure, there is provided a non-transitory computer readable medium having stored thereon a set of computer readable instructions that, when executed by at least one processor, cause an apparatus to at least receive a service request for a service provided by the apparatus, the service request comprising an access token, determine whether to provide the service based at least partly on an authentication based on a credential data element in the service request, the credential data element comprising a network function set identifier, the authentication comprising verifying a cryptographic signature applied over the network function set identifier, and provide the service responsive to a result of the determination indicating the service is to be provided.

According to an eleventh aspect of the present disclosure, there is provided a non-transitory computer readable medium having stored thereon a set of computer readable instructions that, when executed by at least one processor, cause an apparatus to at least provide a service request for a service at a network function provider to the network function provider, and include in the service request an access token and a credential data element, the access token comprising a network function set identifier indication and the credential data element comprising a network function set identifier and a cryptographic signature applied over the network function set identifier.

According to a twelfth aspect of the present disclosure, there is provided a non-transitory computer readable medium having stored thereon a set of computer readable instructions that, when executed by at least one processor, cause an apparatus to at least receive, in a network repository function, from a network function consumer via a proxy entity, an access token request concerning a service provided by a network function provider, the access token request comprising a credential data element of the network function consumer, the credential data element comprising a network function set identifier identifying a set of network functions, the credential data element comprising a cryptographic signature applied over the network function set identifier and decide whether to provide the requested access token, and responsive to deciding to provide the access token, and send the access token to the network function consumer, the access token comprising a network function set identifier indication.

### BRIEF DESCRIPTION OF THE DRAWINGS

FIGURE 1 illustrates an example system in accordance with at least some embodiments of the present invention;
FIGURE 2 illustrates an example credential data element in accordance with at least some embodiments of the present invention;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

In a service based architecture, access tokens are used to authorize network function consumers to access service(s) provided by network function providers. Access token requests may be provided from the network function consumers to a node, such as a network function repository, configured to issue the access tokens, either directly or via a proxy entity. An example of a proxy entity is a service communication proxy, SCP. A network function consumer may issue an access token request with a credential data element which comprises a network function set identifier identifying a network function set in which the network function consumer is comprised in. The network function set identifier may be in the scope of a cryptographic signature of the network function consumer, this signature being included in the credential data element. This prevents misuse of the access token request by a malicious proxy entity, which might otherwise replace the network function set identifier with another one. The proxy entity cannot change the set identifier, as it doesn't possess a signing key of the network function consumer, which would be needed to revise the cryptographic signature of the credential data element. Thus the network is protected against, for example, a maliciously performing, compromised service communication proxy.

A public certificate of the network function consumer may comprise a key usable in verifying the cryptographic signature of the network function consumer. The public certificate of the network function consumer may also comprise an indication of at least one network function set in which the network function consumer is comprised in, enabling checking whether the network function set identifier in the credential data element is correct. The public certificate, which may take the X.509 certificate form, may comprise a subjectAltName field containing a uniform resource indicator, URI, for the NF set identifier as a uniform resource name, URN. This URI-ID may, in detail, contain the NF set identifier of the network function, NFc or server, instance using a suitable format. Additionally or alternatively, the public certificate may comprise a subjectAltName field containing a URI for the NF service set ID as an URN. This URI-ID may, in detail, contain the NF service set ID of the network function, NFc or server, instance using a suitable format. In general, therefore, the public certificate may comprise a network function set identifier, a network function service set identifier, or a URI pointing to such an identifier. A presence of the URI indicates the identifier, be it a NF set identifier or a NF service set identifier.

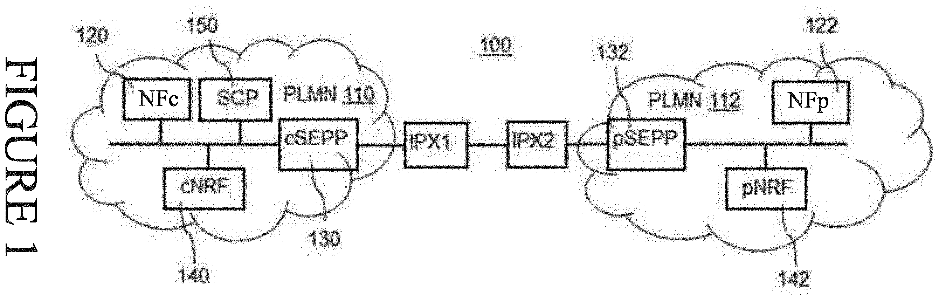

FIGURE 1 illustrates an example system 100 in accordance with at least some embodiments of the present invention. The system comprises two public land mobile networks, PLMNs, 110, 112, each equipped with a network function, NF, 120, 122. A network function may refer to an operational and/or a physical entity. A network function may be a specific network node or element, or a specific function or set of functions carried out by one or more entities, such as virtualized network elements, VNFs. One physical node may be configured to perform plural NFs. Examples of such network functions include a resource control or management function, session management or control function, interworking, data management or storage function, authentication function or a combination of one or more of these functions.

In case of a third generation partnership project, 3GPP, fifth generation, 5G, system service based architecture, SBA, core network, NFs may comprise at least some of an access and mobility management function, AMF, a session management function, SMF, a network slice selection function, NSSF, a network exposure function, NEF, a network repository function, NRF, a unified data management, UDM, an authentication server function, AUSF, a policy control function, PCF, and an application function, AF. A NEF is configured to provide access to exposed network services and capabilities. A UDM is configured to manage network user data in a single, centralized element. The PLMNs each may further comprise a security edge protection proxy, SEPP, 130, 132 configured to operate as a security edge node or gateway. The NFs may communicate with each other using representational state transfer, REST, application programming interfaces, for example. These may be known as RESTful APIs. Further examples of NFs include NFs related to gaming, streaming or industrial process control. The system may comprise also nodes from 3G or 4G node systems, such as home subscriber server, HSS, and a suitable interworking function for protocol translations between e.g. Diameter and JSON-based RESTful APIs. While described herein primarily using terminology of 5G systems, the principles of the invention are applicable also to other communication networks using proxies as described herein, such as 4G networks and non-3GPP networks, as well as wire-line communication networks, for example.

While the example of FIGURE 1 has two PLMNs 110, 122, in general at least some embodiments of the invention may be practiced in a single PLMN, which need not necessarily have SEPPs. In a two-PLMN case, in FIGURE 1, the SEPP 130, 132 is a network node at the boundary of an operator's network that may be configured to receive a message, such as an HTTP request or HTTP response from an NF, to apply protection for sending and to forward the reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF.

In the example of FIGURE 1, communication takes place between a service-consuming NF and a service-producing NF, henceforth referred to as NFc 120 and NFp 122. They may also be referred to as NF service consumer and NF service producer, or more briefly network function consumer and network function producer, respectively. As noted, the NFc and NFp may reside in the same PLMN or in different PLMNs.

A service communication proxy, SCP, 150 may be deployed for indirect communication between network functions, NFs. An SCP is an intermediate network entity to assist in indirect communication between an NFc and an NFp, including routing messages, such as, for example, control plane messages between the NFs, and optionally including discovering and selecting NFp 122 on behalf of NFc 120 or requesting an access token from the NRF 140, 142 or an Authorization Server on behalf of NFc 120 to access the service of NFp 122. An SCP is an example of a proxy entity.

Direct communication may be applied between NFc 120 and NFp 122 for an NF service, or NF service communication may be performed indirectly via proxy entities, such as SCP(s) 150. In direct communication, the NFc 120 performs discovery of the target NFp 122 by local configuration or via local NRF, cNRF 140. In indirect communication, the NFc 120 may delegate the discovery of the target NFp 122 to the SCP 150. In the latter case, the SCP may use the parameters provided by NFc 120 to perform discovery and/or selection of the target NFp 122, for example with reference to one or more NRF

NF discovery and NF service discovery enable entities, such as NFc or SCP, to discover a set of NF instance(s) and NF service instance(s) for a specific NF service or an NFp type. The NFc and/or the SCP may be core network entities. The network repository function, NRF, may comprise a function that is used to support the functionality of NF and NF service registration, discovery, authorization and status notification. Additionally or alternatively, the NRF may be configured to act as an authorization server. The NRF may maintain an NF profile of available NFp entities and their supported services. The NRF may notify about newly registered, updated, or deregistered NFp entities along with its NF services to a subscribed NFc or SCP. An NRF may thus advise NFc entities or SCP(s) concerning where, that is, from which NFp entities, they may obtain services they need. An NRF may be co-located together with an SCP, for example, run in a same physical computing substrate. Alternatively, NRF may be in a physically distinct node than an SCP or even hosted by a service provider distinct from a network operator.

In order for the NFc 120 or SCP 150 to obtain information about NFp 122 and/or NF service(s) registered or configured in a PLMN/slice, NFc 120 or SCP 150 may initiate, based on local configuration, a discovery procedure with an NRF, such as cNRF 140. The discovery procedure may be initiated by providing the type of the NFp and optionally a list of the specific service(s) the NFc or SCP is attempting to discover. The NFc 120 or SCP 150 may additionally or alternatively provide other service parameters, such as information relating to network slicing.

It is to be noted that at least some of the entities or nodes 120, 122, 140, 142 may act in both service-consuming and service-providing roles and that their physical structure may be similar or identical, while their role in the present examples in delivery of a particular message or service is identified by use of the prefix/suffix "c" or "p" indicating whether they are acting as the service-consuming or service-producing NF. It is to be noted that instead of "c" and "p", "v" for visited and "h" for home can be used to refer to at least some respective entities in the visited and home PLMNs. In some embodiments, a system implementing an embodiment of the present disclosure comprises both fourth generation, 4G, and fifth generation, 5G, parts.

In some embodiments OAuth based service authorization and/or access token exchange is applied between NFc and NFp for the purpose of authorizing an NFc to access the service of an NFp. Alternatively to OAuth, another authorization framework may be applied. Thus, a network entity, such as an NRF, may be or perform as an authorization server, AS, such as an OAuth authorization server, for example. The NFc may be an OAuth client and the NFp may operate as OAuth resource server, and they may be configured to support OAuth authorization framework as defined in RFC 6749, for example. An NFc, or an SCP acting on behalf of the NFc, may send two separate requests to an NRF, firstly a discovery request to which the NRF responds by advising concerning suitable NFp entities, and secondly an access token request concerning one of the suitable NFp entities. The NRF may respond to the access token request by providing the requested access token if it decides to grant access, and by a refusal in case the NRF decides to not grant access.

In general, a network support function such as an NRF may further be configured to act as an authorization server, and provide the NFc, or an SCP acting on behalf of the NFc, with a cryptographic access token authorizing the NFc to use the service provided by the NFp. In general, an NRF is a terminological example of a network support node. In general, an SCP is a terminological example of a proxy entity. The NFc and/or SCP may include the access token in a request message when requesting the service from the NFp, for example in an "authorization bearer" header. Such an access token may be referred to herein briefly as a token. For example, the NRF may act as an OAuth 2.0 authentication server. The token may comprise e.g. identifiers of the NFc, NRF and/or NFp, a timestamp and/or an identifier of the specific service which is authorised for the NFc with the token. The token may comprise a network function set identifier, or more generally a network function set identifier indication, identifying a set of network function consumers such that the same access token may be used by any network function consumer which is comprised in this set to access the service. The token may comprise a token identifier of itself, for example a serial number. The token identifier may uniquely identify the token. The token may be cryptographically signed using a private key of the NRF. The afore-mentioned parameters, comprised in the access token, may be in scope of the signature, meaning the integrity of these parameters may be verified by verifying the signature. A validity of such a cryptographic signature may be verified using the corresponding public key of the NRF, which the NFp may obtain in connection with registering with the NRF the service(s) it offers, for example. When the NFc contacts the NFp, it may present the access token, which the NFp may then verify, for example at least in part by using its copy of the public key of the NRF. A message authentication code, MAC, based cryptographic signature may be used in some embodiments instead of, or in addition to, an asymmetric-cryptography based signature. Issuing an access token via a service communication proxy may comprise the proxy using the access token on behalf of the NFc with or without forwarding it to the NFc. In some cases, an NFc may use indirect routing via a proxy entity when requesting the access token from the NRF, and then use direct routing without proxy entities when requesting the service from the NFp, using the access token.

When requesting a service from an NFp, an NFc or an SCP acting on behalf of the NFc may include in a service request the access token authorizing access to the service, and a credential data element, such as client credentials assertion, CCA, of the NFc and/or the SCP. A CCA may comprise, for example, one, more than one or all of the following fields:
CCA (NFc)
sub: NFc Instance id
iat: Issue Time
exp: Expiry time
aud: NFp
NF Set ID: set id

Here sub is an NF instance identifier of the NFc which generates this CCA. Here iat is a timestamp declaring the time of issue of the CCA, and exp an expiry time of the CCA. Here aud is a list of NF types expected to process the CCA, in this example the CCA is aimed at use in NFp entities. The set id identifies a set of NF instances in which the NFc is comprised. For example, the set may be a set of NFc entities of the same type. Further, the set may comprise a set of NFc entities of the same type and having a same type of subscription. A type of subscription may comprise a machine-type subscription, for example.

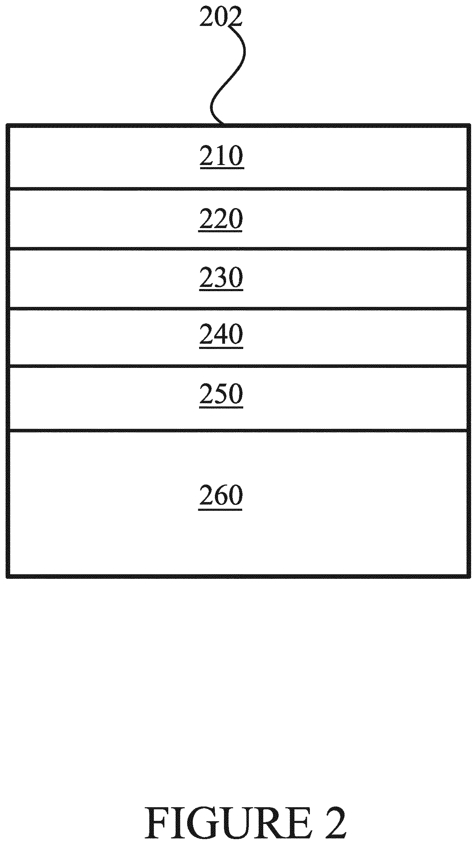

FIGURE 2 illustrates an example credential data element in accordance with at least some embodiments of the present invention. A credential data element, such as, for example, a CCA or a transport layer security, TLS, certificate, 202, comprises the following fields. Field 210 comprises an identifier of the NFc whose credential data element this is, in other words, field 210 comprises an identifier of the NFc. Field 220 comprises an issue time, indicating a moment in time when the NFc has constructed the credential data element. Field 230 comprises an expiry time, indicating a latest point in time when credential data element 202 may be accepted. After this time, messages carrying this credential data element should be refused, since the NFc should not try to use an expired credential data element and attempts to use an expired credential data element are warning signs of attempts to abuse the system. The NFc can always generate a new credential data element and is not constrained to use an expired one.

Field 240 comprises a list of NF types expected to process the credential data element. For example, this list may indicate that NRF and/or NFp nodes are expected to process credential data element 202. Other node types may refuse to process a message which carries this credential data element. Field 250 comprises the network function set identifier, as disclosed herein above. Finally, field 260 comprises a cryptographic signature obtained over fields 210, 220, 230, 240 and 250 and other parameters, if present in the credential data element. In other words, fields 210, 220, 230, 240 and 250 are provided to a cryptographic signature algorithm as input, and the signature obtained as output is stored in field 260. The signature may be obtained using asymmetric encryption or MAC encryption, for example.

A NRF or NFp may validate the credential data element by verifying the signature from field 260, using a public key from a certificate of the NFc node which has issued credential data element 202. Further, the certificate of the NFc may comprise an indication of one or more NF sets where the NFc is comprised in. As part of validating the credential data element, the NRF or NFp may check that the network function set identifier from field 250 is among the at least one network function set identifier in the certificate. The certificate is cryptographically signed by an entity other than the NFc, wherefore the NFc cannot impersonate being a member of a NF set where it in fact is not comprised in. Likewise, the SCP or other proxy entity cannot modify the credential data element, as it lacks the key needed to update the signature in field 260 to account, for example, for changing the NF set ID in field 250.

In general, credential data elements may be expected to be more short-lived than NRF-generated access tokens. So, they can be used in deployments with requirements for tokens with shorter lifetime for NF-NF communication. There is a trade-off that when the lifetime of the credential data element is too short, it requires the NF Service Consumer to generate a new credential data element for every new service request. The credential data element may comprise a X.509 URL (x5u) to refer to a resource for the public key certificate or certificate chain used for signing the client authentication assertion, or a X.509 Certificate Chain (x5c) indicating the X.509 public certificate or certificate chain used for signing the credential data element.

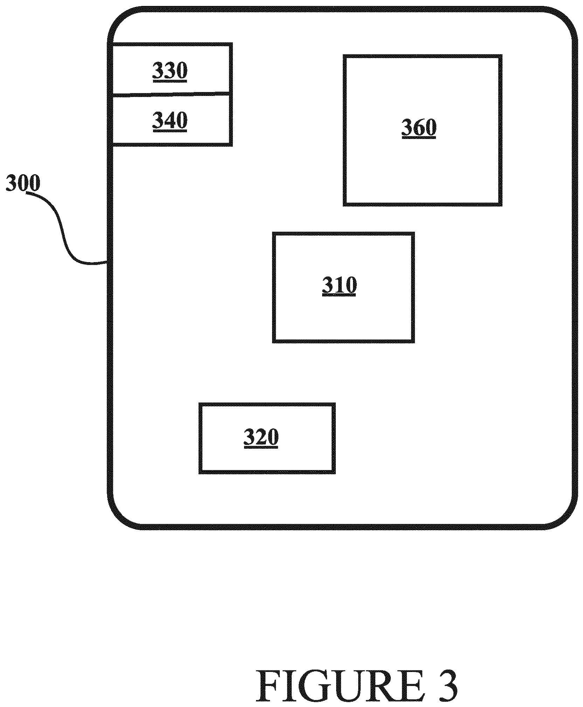

FIGURE 3 illustrates an example apparatus capable of supporting at least some embodiments of the present invention. Illustrated is device 300, which may comprise, for example, in applicable parts, a physical node running a NFp, NRF and/or a NFc, for example. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices, AMD, Corporation. Processor 310 may comprise at least one AMD Epyc and/or Intel Xeon processor. Processor 310 may comprise at least one application-specific integrated circuit, ASIC. Processor 310 may comprise at least one field-programmable gate array, FPGA. Processor 310 may be means for performing method steps in device 300, such as receiving, determining, providing, including and/or deciding, for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with a suitable messaging protocol.

Device 300 may comprise user interface, UI, 360. UI 360 may comprise at least one of a display, a keyboard or a touchscreen. A user may be able to operate device 300 via UI 360, for example to configure operating parameters, such as authentication policy information, for example.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively, to a serial bus, the transmitter may comprise a parallel bus transmitter. Likewise, processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively, to a serial bus, the receiver may comprise a parallel bus receiver.

Device 300 may comprise further devices not illustrated in FIGURE 3. In some embodiments, device 300 lacks at least one device described above.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

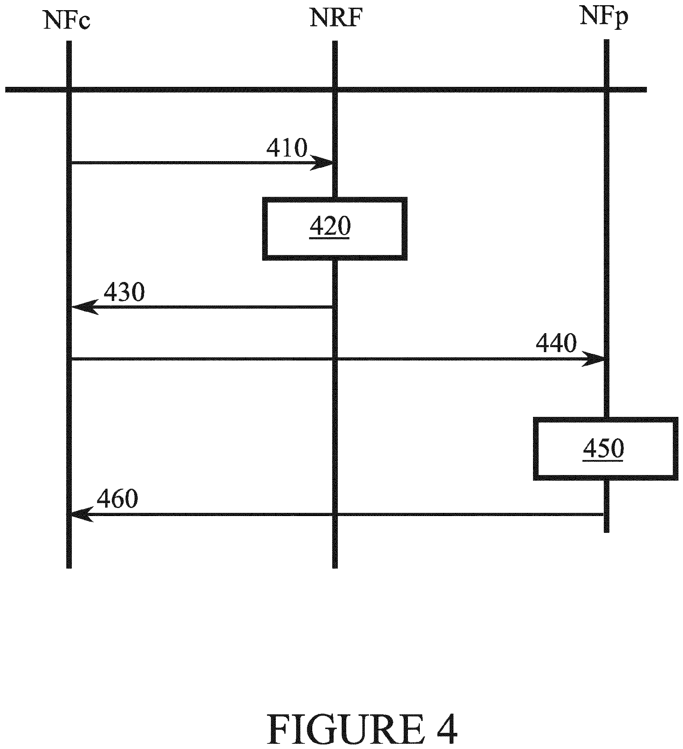

FIGURE 4 illustrates signalling in accordance with at least some embodiments of the present invention. On the vertical axes are disposed, on the left, the NFc, in the centre, a NRF and on the right, an NFp. Time advances from the top toward the bottom.

In phase 410, the NFc requests an access token from the NRF, this access token to authorize the NFc to access a service provided by the NFp. The access token request of phase 410 comprises the credential data element of the NFc, for example a credential data element such as the one illustrated in FIGURE 2. The access token request of phase 410 may further comprise, outside of the credential data element, a network function set identifier for which the access token is requested.

In phase 420, the NRF decides whether to issue the requested access token. For example, the NRF may determine if each node in the network function set identified in the credential data element and, optionally, also elsewhere in the access token request should be authorized to access the service, and the NRF may check that the network function set identifier in the credential data element of the NFc is also indicated in the public certificate of the NFc as a set in which the NFc is comprised. The NRF may also, or alternatively, check, that the network function set identifier in the credential data element matches with a network function set identifier in the access token request outside of the credential data element, when this is present. The NRF may also use the public certificate of the NFc, in particular a key comprised in this certificate, to check the cryptographic signature of the credential data element.

In case the NRF decides to authorise the set of network functions to access the service, it constructs and sends the access token to the NFc. The access token may be signed by the NRF, and it may comprise the network function set identifier which identifies the set of network functions which are authorized using the access token. The provision of the access token is illustrated as phase 430 in FIGURE 4. In case the NRF refuses to issue the requested access token, it may send an error message to the NFc in phase 430 instead of the requested access token.

In phase 440, the NFc requests the service from the NFp. The request of phase 440 comprises the access token received in phase 430, and the credential data element of the NFc. In case time elapses between phases 410 and 440 to the extent that the credential data element included in the access token request of phase 410 expires, the NFc can compile a new one and include the new credential data element in the request of phase 440. The request of phase 440 may also include the network function set identifier in the request, but outside of the credential data element. The request may thus comprise the network function set identifier twice, once inside the credential data element and once outside it.

In phase 450, the NFp analyses the request of phase 440. The NFp may verify the access token by checking a cryptographic signature on the access token, the signature being of the NRF, or other authorisation server, which issued the token. Further, the NFp may check that the network function set identifier in the credential data element included in the request of phase 440 is present, or otherwise indicated, in the public certificate of the NFc. It may also, or alternatively, be checked that the network function set identifier in the credential data element matches a network function set identifier in the request but outside the credential data element. The public certificate may also be used by the NFp to verify the cryptographic signature on the credential data element. The NFp may also check, that the network function identifier in the credential data element is the same one as the network function identifier in the access token.

If the access token is verified as authentic, and the credential data element has the same network function set identifier as in the public certificate of the NFc, and optionally also in the access token, the NFp may provide the requested service, phase 460. In case one or more of these checks fails, for example is the public certificate doesn't support the fact that the NFc would be comprised in the network function set indicated in the credential data element, the NFp may provide an error message instead of the service in phase 460.

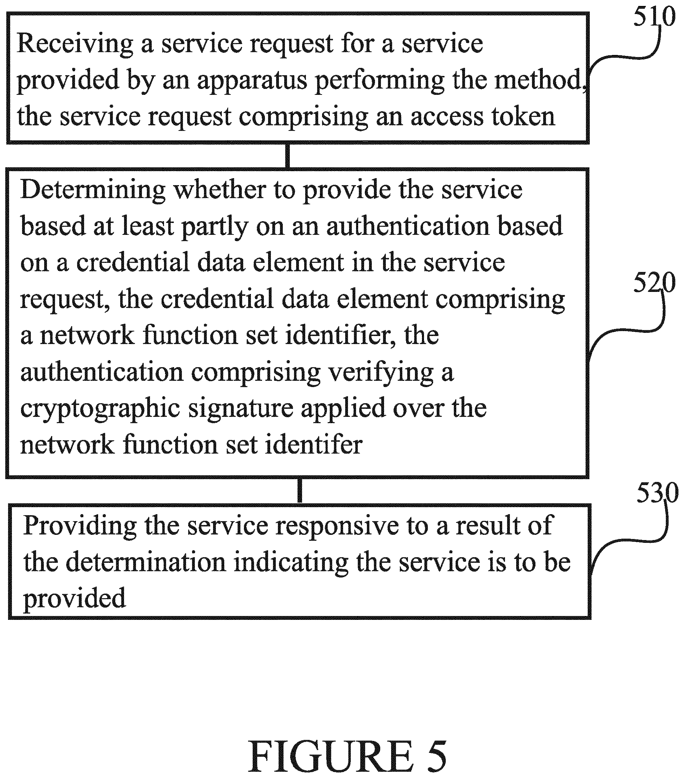

FIGURE 5 is a flow graph of a method in accordance with at least some embodiments of the present invention. The phases of the illustrated method may be performed in a NFp, or in a control device configured to control the functioning thereof, when installed therein.

Phase 510 receiving a service request for a service provided by an apparatus performing the method, the service request comprising an access token. Phase 520 comprises determining whether to provide the service based at least partly on an authentication based on a credential data element in the service request, the credential data element comprising a network function set identifier, the authentication comprising verifying a cryptographic signature applied over the network function set identifier. Phase 520 comprises providing the service responsive to a result of the determination indicating the service is to be provided.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The expression "at least one of A or B" in this document means A, or B, or both A and B.

### INDUSTRIAL APPLICABILITY

At least some embodiments of the present invention find industrial application in communication network security.

### ACRONYMS LIST

- API: application programming interface
- CCA: client credentials assertion
- FQDN: fully qualified domain name
- NFc: network function consumer
- NFp: network function producer
- NRF: network repository function
- SCP: service communication proxy

### TECHNICAL CLAUSES:

Clause 1. An apparatus comprising at least one processing core, at least one memory including computer program code, the at least one memory and the computer program code being configured to, with the at least one processing core, cause the apparatus at least to:
   - receive a service request for a service provided by the apparatus, the service request comprising an access token;
   - determine whether to provide the service based at least partly on an authentication based on a credential data element in the service request, the credential data element comprising a first network function set identifier, the authentication comprising verifying a cryptographic signature applied over the first network function set identifier, and
   - provide the service responsive to a result of the determination indicating the service is to be provided.
Clause 2. The apparatus according to Clause 1, wherein the at least one memory and the computer program code are configured to, with the at least one processing core, cause the apparatus to receive the service request from a proxy entity.
Clause 3. The apparatus according to Clause 1 or 2, wherein the access token comprises a second cryptographic signature, the second cryptographic signature being of a network repository function or an authentication server.
Clause 4. The apparatus according to Clause 3, wherein the access token comprises an OAuth token in accordance with standards established by the internet engineering task force.
Clause 5. The apparatus according to any of Clauses 1 - 4, wherein the cryptographic signature is comprised in the credential data element, the cryptographic signature being of a network function consumer.
Clause 6. The apparatus according to Clause 5, wherein the credential data element comprises a client credentials assertion data element.
Clause 7. The apparatus according to Clause 5, wherein the credential data element comprises a transport layer security, TLS, certificate.
Clause 8. The apparatus according to any of Clauses 1 - 7, wherein the authentication further comprises verifying that the first network function set identifier is consistent with a second network function set identifier indicated in a certificate of the network function consumer.
Clause 9. An apparatus comprising at least one processing core, at least one memory including computer program code, the at least one memory and the computer program code being configured to, with the at least one processing core, cause the apparatus at least to:
   - provide a service request for a service at a network function provider to the network function provider, and
   - include in the service request an access token and a credential data element, the access token comprising a first network function set identifier indication and the credential data element comprising a second network function set identifier and a cryptographic signature applied over the second network function set identifier.
Clause 10. The apparatus according to Clause 9, wherein the credential data element comprises a client credentials assertion data element.
Clause 11. An apparatus comprising at least one processing core, at least one memory including computer program code, the at least one memory and the computer program code being configured to, with the at least one processing core, cause the apparatus at least to:
   - receive, in a network repository function, from a network function consumer via a proxy entity, an access token request concerning a service provided by a network function provider, the access token request comprising a credential data element of the network function consumer, the credential data element comprising a first network function set identifier identifying a set of network functions, the credential data element comprising a cryptographic signature applied over the first network function set identifier;
   - decide whether to provide the requested access token, and responsive to deciding to provide the access token, and
   - send the access token to the network function consumer, the access token comprising a network function set identifier indication.
Clause 12. The apparatus according to Clause 11, wherein the network function set identifier indication indicates that the access token authorizes network functions comprised in the set of network functions as authorized to access the service provided by a network function provider.
Clause 13. The apparatus according to Clause 11 or 12, wherein the deciding comprises checking that the first network function set identifier in the credential data element is the same as a second network function set identifier, provided in the access token request outside the credential data element.
Clause 14. A method, comprising:
   - receiving a service request for a service provided by an apparatus performing the method, the service request comprising an access token;
   - determining whether to provide the service based at least partly on an authentication based on a credential data element in the service request, the credential data element comprising a first network function set identifier, the authentication comprising verifying a cryptographic signature applied over the first network function set identifier, and
   - providing the service responsive to a result of the determination indicating the service is to be provided.
Clause 15. The method according to Clause 14, wherein the service request is received in the apparatus from a proxy entity.
Clause 16. The method according to Clause 14 or 15, wherein the access token comprises a second cryptographic signature, the second cryptographic signature being of a network repository function or an authentication server.
Clause 17. The method according to Clause 16, wherein the access token comprises an OAuth token in accordance with standards established by the internet engineering task force.
Clause 18. The method according to any of Clauses 14 - 17, wherein the cryptographic signature is comprised in the credential data element, the cryptographic signature being of a network function consumer.
Clause 19. The method according to Clause 18, wherein the credential data element comprises a client credentials assertion data element.
Clause 20. The method according to Clause 18, wherein the credential data element comprises a transport layer security, TLS, certificate.
Clause 21. The method according to any of Clauses 14 - 20, wherein the authentication further comprises verifying that the first network function set identifier is consistent with a second network function set identifier indicated in a certificate of the network function consumer.
Clause 22. A method, comprising:
   - providing, from an apparatus, a service request for a service at a network function provider to the network function provider, and
   - including in the service request an access token and a credential data element, the access token comprising a first network function set identifier indication and the credential data element comprising a second network function set identifier and a cryptographic signature applied over the second network function set identifier.
Clause 23. The method according to Clause 22, wherein the credential data element comprises a client credentials assertion data element.
Clause 24. A method, comprising:
   - receiving, in a network repository function, from a network function consumer via a proxy entity, an access token request concerning a service provided by a network function provider, the access token request comprising a credential data element of the network function consumer, the credential data element comprising a first network function set identifier identifying a set of network functions, the credential data element comprising a cryptographic signature applied over the first network function set identifier;
   - deciding whether to provide the requested access token, and responsive to deciding to provide the access token, and
   - sending the access token to the network function consumer, the access token comprising a network function set identifier indication.
Clause 25. The method according to Clause 24, wherein the network function set identifier indication indicates that the access token authorizes network functions comprised in the set of network functions as authorized to access the service provided by a network function provider.
Clause 26. The method according to Clause 24 or 25, wherein the deciding comprises checking that the first network function set identifier in the credential data element is the same as a second network function set identifier, provided in the access token request outside the credential data element.
Clause 27. An apparatus comprising:
   - means for receiving a service request for a service provided by the apparatus, the service request comprising an access token;
   - means for determining whether to provide the service based at least partly on an authentication based on a credential data element in the service request, the credential data element comprising a network function set identifier, the authentication comprising verifying a cryptographic signature applied over the network function set identifier, and
   - means for providing the service responsive to a result of the determination indicating the service is to be provided.
Clause 28. An apparatus comprising:
   - means for providing, from an apparatus, a service request for a service at a network function provider to the network function provider, and
   - means for including in the service request an access token and a credential data element, the access token comprising a first network function set identifier indication and the credential data element comprising a second network function set identifier and a cryptographic signature applied over the second network function set identifier.
Clause 29. An apparatus comprising:
   - means for receiving, in a network repository function, from a network function consumer via a proxy entity, an access token request concerning a service provided by a network function provider, the access token request comprising a credential data element of the network function consumer, the credential data element comprising a network function set identifier identifying a set of network functions, the credential data element comprising a cryptographic signature applied over the network function set identifier;
   - means for deciding whether to provide the requested access token, and responsive to deciding to provide the access token, and
   - means for sending the access token to the network function consumer, the access token comprising a network function set identifier indication.
Clause 30. A non-transitory computer readable medium having stored thereon a set of computer readable instructions that, when executed by at least one processor, cause an apparatus to at least:
   - receive a service request for a service provided by the apparatus, the service request comprising an access token;
   - determine whether to provide the service based at least partly on an authentication based on a credential data element in the service request, the credential data element comprising a network function set identifier, the authentication comprising verifying a cryptographic signature applied over the network function set identifier, and
   - provide the service responsive to a result of the determination indicating the service is to be provided.
Clause 31. A non-transitory computer readable medium having stored thereon a set of computer readable instructions that, when executed by at least one processor, cause an apparatus to at least:
   - provide a service request for a service at a network function provider to the network function provider, and
   - include in the service request an access token and a credential data element, the access token comprising a network function set identifier indication and the credential data element comprising a network function set identifier and a cryptographic signature applied over the network function set identifier.
Clause 32. A non-transitory computer readable medium having stored thereon a set of computer readable instructions that, when executed by at least one processor, cause an apparatus to at least:
   - receive, in a network repository function, from a network function consumer via a proxy entity, an access token request concerning a service provided by a network function provider, the access token request comprising a credential data element of the network function consumer, the credential data element comprising a network function set identifier identifying a set of network functions, the credential data element comprising a cryptographic signature applied over the network function set identifier and
   - decide whether to provide the requested access token, and responsive to deciding to provide the access token, and
   - send the access token to the network function consumer, the access token comprising a network function set identifier indication.

## Claims

1. An apparatus comprising:
- means for receiving a service request for a service provided by the apparatus, the service request comprising an access token;
- means for determining whether to provide the service based at least partly on an authentication based on a credential data element in the service request, the credential data element comprising a network function set identifier, the authentication comprising verifying a cryptographic signature applied over the network function set identifier, and
- means for providing the service responsive to a result of the determination indicating the service is to be provided.

2. The apparatus according to claim 1, wherein the apparatus is configured to receive the service request from a proxy entity.

3. The apparatus according to claim 1 or 2, wherein the access token comprises a second cryptographic signature, the second cryptographic signature being of a network repository function or an authentication server.

4. The apparatus according to claim 3, wherein the access token comprises an OAuth token in accordance with standards established by the internet engineering task force.

5. The apparatus according to any of claims 1 - 4, wherein the cryptographic signature is comprised in the credential data element, the cryptographic signature being of a network function consumer.

6. The apparatus according to claim 5, wherein the credential data element comprises a client credentials assertion data element.

7. The apparatus according to claim 5, wherein the credential data element comprises a transport layer security, TLS, certificate.

8. The apparatus according to any of claims 1 - 7, wherein the authentication further comprises verifying that the first network function set identifier is consistent with a second network function set identifier indicated in a certificate of the network function consumer.

9. An apparatus comprising:
- means for providing, from an apparatus, a service request for a service at a network function provider to the network function provider, and
- means for including in the service request an access token and a credential data element, the access token comprising a first network function set identifier indication and the credential data element comprising a second network function set identifier and a cryptographic signature applied over the second network function set identifier..

10. An apparatus comprising:
- means for receiving, in a network repository function, from a network function consumer via a proxy entity, an access token request concerning a service provided by a network function provider, the access token request comprising a credential data element of the network function consumer, the credential data element comprising a network function set identifier identifying a set of network functions, the credential data element comprising a cryptographic signature applied over the network function set identifier;
- means for deciding whether to provide the requested access token, and responsive to deciding to provide the access token, and
- means for sending the access token to the network function consumer, the access token comprising a network function set identifier indication.

11. The apparatus according to claim 10, wherein the deciding comprises checking that the first network function set identifier in the credential data element is the same as a second network function set identifier, provided in the access token request outside the credential data element.

12. A method, comprising:
- receiving a service request for a service provided by an apparatus performing the method, the service request comprising an access token;
- determining whether to provide the service based at least partly on an authentication based on a credential data element in the service request, the credential data element comprising a first network function set identifier, the authentication comprising verifying a cryptographic signature applied over the first network function set identifier, and
- providing the service responsive to a result of the determination indicating the service is to be provided.

13. A method, comprising:
- providing, from an apparatus, a service request for a service at a network function provider to the network function provider, and
- including in the service request an access token and a credential data element, the access token comprising a first network function set identifier indication and the credential data element comprising a second network function set identifier and a cryptographic signature applied over the second network function set identifier.

14. A method, comprising:
- receiving, in a network repository function, from a network function consumer via a proxy entity, an access token request concerning a service provided by a network function provider, the access token request comprising a credential data element of the network function consumer, the credential data element comprising a first network function set identifier identifying a set of network functions, the credential data element comprising a cryptographic signature applied over the first network function set identifier;
- deciding whether to provide the requested access token, and responsive to deciding to provide the access token, and
- sending the access token to the network function consumer, the access token comprising a network function set identifier indication.

15. A computer program configured to cause a method according to one or more of claims 12, 13 or 14 to be performed, when run.
